# EUROPÄISCHE PATENTSCHRIFT

(11) **EP 1 775 562 B1**
(45) Veröffentlichungstag und Bekanntmachung des Hinweises auf die Patenterteilung: **27.02.2013**
(21) Anmeldenummer: 06014820.2
(22) Anmeldetag: 17.07.2006
(51) Int. Cl.: G01F 23/296

(54) **Füllstand- und/oder Grenzstand-Messvorrichtung mit flexiblem Verbindungsstück**
Level and/or limit level measuring device having flexible connection piece
Dispositif de mesure de niveau de remplissage et/ou de niveau seuil muni d'un élément de connexion flexible

(30) Priorität: 11.10.2005 DE 102005049034
(43) Veröffentlichungstag der Anmeldung: 18.04.2007
(73) Patentinhaber: VEGA Grieshaber KG, 77709 Schiltach (DE)
(72) Erfinder: Ohmayer, Gerd, 77716 Haslach i.K. (DE)
(74) Vertreter: Patentanwälte Westphal, Mussgnug & Partner

(56) Entgegenhaltungen:
- WO-A-98/28598
- FR-A- 1 531 962
- US-A- 4 740 726

## Beschreibung

Die Erfindung bezieht sich auf eine Füllstand- und/oder Grenzstand-Messvorrichtung mit flexiblem Verbindungsstück gemäß den oberbegrifflichen Merkmalen des Patentanspruchs 1.

Eine solche Vorrichtung ist z. B. aus US 4,740,726 bekannt. Eine ähnliche Einrichtung beschreibt WO 98/28598 A1.

Zur Grenzstanderfassung ist eine Füllstand- und/oder Grenzstand-Messvorrichtung mit flexiblem Verbindungsstück bekannt, bei der in einem Gehäuse eine Sende- und/oder Empfangseinrichtung aufgenommen ist, wobei an der Sende- und/oder Empfangseinrichtung über ein flexibles Verbindungsstück ein Schwingelement angeschlossen ist. Das Schwingelement bildet zusammen mit der Sende- und/oder Empfangseinrichtung einen Oszillator. Die mechanischen Schwingungen des Schwingelementes werden bei Anwesenheit von Schüttgut'gedämpft. Die Schwingungsdämpfung dient deshalb als Indikator für das Vorhandensein von Füllgut an der Messstelle und wird mittels einer nachgeschalteten Vorrichtung in ein Grenzstandmeldesignal umgewandelt.

Das flexible Verbindungsstück ist dabei in Art eines Kabels aus einem Kunststoffmaterial ausgebildet. Derartige Anordnungen weisen bisher jedoch lediglich-Einsatz temperaturen bis maximal 160°C auf. Das flexible Verbindungsstück wird üblicherweise mit einem Flansch, einem Einschraubstutzen oder einem sonstigen Stutzen als Verbindungseinrichtung an der Sende- und/oder Empfangseinrichtung, einem Verlängerungsrohr bzw. an dem Schwingelement befestigt, wobei als flexibles Verbindungsstück handelsübliche Kunststoffschläuche oder auch Sonderleitungen verwendet werden, die großteils mit einem innen liegenden Tragseil versehen sind, welches unten im Schwingelement und oben in einem Stutzen am Gehäuse oder Verlängerungsrohr abgespannt sind.

Solche Ausgestaltungen weisen eine Vielzahl an Nachteilen auf. Teils sind bisherige Kabel mit innen liegendem Drahtseil sehr steif. Leiter bzw. Leitungen sind auch für Anwendungen bei hohen Temperaturen von 160°C im allgemeinen außen und nicht weiter geschützt angeordnet. Die Leiter des flexiblen Verbindungsstücks liegen oder hängen in Art eines Kabels mit dem Kunststoff-Außenmantel direkt im Schüttgut oder Medium des Behältnisses und sind Abrieb oder Abnutzung durch das Schüttgut direkt ausgesetzt. Außerdem ist eine ausreichende Leitfähigkeit des Kabel-Außenmantels nicht bei allen Kunststoffen umsetzbar bzw. vorhanden. Ein derzeitiges Kabel aus PUR (Polyurethan) ist mit einem leitfähigen Außenmantel mit einem Oberflächenwiderstand < 10⁹ Ohm versehen. Nachteilhaft ist, dass ein Abknicken eines derart gebildeten Kunststoffkabels nicht immer vermeidbar ist. Eine 100%-ig leitfähige Verbindung muss aufwändig durch eine Masseleitung mit fester Verbindung zwischen dem Schwingelement und dem Befestigüngselement durch Schweißen oder Schrauben hergestellt werden. Auch sind die Leitungen im höheren Temperaturbereich auch dann nur eingeschränkt einsetzbar, wenn sie im eingebauten Zustand bewegt werden und nicht fest verlegt sind.

Die Aufgabe der Erfindung besteht darin, eine Füllstand- und/oder Grenzstand-Messvorrichtung mit flexiblem Verbindungsstück zu verbessern, insbesondere derart auszugestalten, dass ein Einsatz zur Füllstands- oder Grenzstandsraessung eines Mediums in einem Behältnis auch bei hohen Temperaturen ermöglicht wird.

Diese Aufgabe wird durch eine Füllstand- und/oder Grenzstand-Messvorrichtung mit flexiblem Verbindungsstück gemäß den Merkmalen des Patentanspruchs 1 gelöst.

Vorteilhafte Ausgestaltungen sind Gegenstand von abhängigen Ansprüchen.

Bevorzugt wird demgemäss eine Füllstand- und/oder Grenzstand-Messvorrichtung mit einer Sende- und/oder Empfangseinrichtung zum Erzeugen einer Schwingung bzw. zum Empfangen einer Schwingung und Bereitstellen eines entsprechenden Empfangssignals, mit einem Schwingelement, das mit der Sende- und/oder Empfangseinrichtung und mit einem flexiblen Verbindungsstück, das in einem Bereich zwischen der Sende- und/oder Empfangseinrichtung und dem Schwingelement zum Übertragen der Schwingung zwischen diesen angeordnet ist, wobei das flexible Verbindungsstück aus einem Hochtemperatur-Kunststoffschlauch, der unmittelbar von einem metallischen Geflecht umsponnen ist, gebildet ist.

Vorteilhaft ist insbesondere eine Füllstand- und/oder Grenzstand-Messvorrichtung, bei der das flexible Verbindungsstück einen nicht kreisrunden Querschnitt aufweist, wobei neben ovalen Querschnitten insbesondere auch mit Ecken ausgebildete Querschnitte in Form von z.B. quaderförmigen Hohlprofilen umsetzbar sind. Neben Hohlprofilen sind auch Vollprofile umsetzbar, wobei solche zweckmäßigerweise dann einen nur geringen Umfang aufweisen.

Vorteilhaft ist insbesondere eine Füllstand- und/oder Grenzstand-Messvorrichtung, bei der das flexible Verbindungselement in Längserstreckung an seinen Enden Befestigungsmittel zum wieder lösbaren Befestigen an der Sende- und/oder Empfangseinrichtung an dem Schwingelement und/oder an Verlängerungsrohren aufweist. Die Befestigungsmittel bilden in Verbindung mit entsprechenden anzukoppelnden Befestigungseinrichtungen vorzugsweise eine metallische Abdichtung aus.

Vorteilhaft ist insbesondere eine Füllstand- und/oder Grenzstand-Messvorrichtung, bei der das metallische Geflecht mit den Befestigungsmitteln verpresst ist. Das metallische Geflecht besteht insbesondere aus Edelstahl.

In einer anderen Variante kann das metallische Geflecht als Metallschutzschlauch ausgebildet sein. Solche Metallschutzschläuche werden z. B. in DIN 49012 beschrieben. Vertrieben werden solche Metallschutzschläuche z. B. von der Firma Hugro-Armaturen GmbH in Deutschland.

Vorteilhaft ist insbesondere eine Füllstand- und/oder Grenzstand-Messvorrichtung, bei der das metallische Geflecht von einem Kunststoffmantel oder einem Kunststoffgewebe umgeben ist.

Vorteilhaft ist insbesondere eine Füllstand- und/oder Grenzstand-Messvorrichtung aus Materialien, welche einen Einsatz bei Temperaturen größer 100°C, insbesondere größer 160°C ermöglichen.

Eine solche Füllstand- und/oder Grenzstand-Messvorrichtung mit flexiblem Verbindungsstück löst nach derzeitigen Versuchen in vorteilhafter Weise die Vielzahl der bestehenden Probleme. Ermöglicht wird insbesondere ein Einsatz als z.B. Vibrations-Grenzstands-Messgerät bei Temperaturen von bis zu 260°C oder ggf. auch mehr zum Erfassen von Grenzständen in Schüttgütern mit beweglich aufgehängtem Schwingelement in Art einer Kabelversion des nunmehr mit einem metallischen Element ausgebildeten flexiblen Verbindungsstücks. Allgemein sind für die vorliegenden Zwecke unter Schwingungen auch Vibrationen bzw. umgekehrt zu verstehen.

Bei einer bekannten Kabelversion bestand immer ein Problem, die entsprechenden Sonderleitungen in kleinen Mengen zu beschaffen, da dies mit hohen Kosten oder großen Mindestmengen verbunden war. Dies hielt bislang immer davon ab, weitere Entwicklungen in Richtung Hochtemperaturausführungen von Kabelversionen vorzunehmen. Diese Problematik wurde nunmehr komplett umgangen, indem eine flexible und insbesondere zugleich dichte Rohrverbindung zwischen der Verbindungseinrichtung und dem Schwingelement bereit gestellt wurde, was im Falle z.B. eines Vibrationsgrenzschalters durch einen mit Edelstahldrahtgeflecht umsponnenen Hochtemperatur-Kunststoffschlauch als dem flexiblen Verbindungsstück ermöglicht wird. Jedoch sind auch andere Werkstoffkombinationen einsetzbar.

Die Verbindungen des Verbindungsstücks mit der Verbindungseinrichtung, einem Verlängerungsrohr und dem Schwingelement ist vorzugsweise als metallisch dichtende Schraubverbindung ausgeführt, kann aber je nach Bedarf auch verschraubt, mit O-Ring-Abdichtung oder geschweißt ausgeführt werden. Einfache mit einem Edelstahldrahtgeflecht umsponnene Hochtemperaturschläuche sind in vorteilhafter Weise handelsüblich erhältlich und bis zur Einsatzgrenze darin enthaltener Hochtemperaturkunststoffe, welche für einen innen oder außen liegenden Schlauch verwendet werden, einsetzbar. Im Fall eines PTFE-Innenschlauches z.B. bis 260°C. Durch Herstellung einer absolut dichten hochtemperaturtauglichen Rohrverbindung oder Schlauchverbindung zwischen Schwingelement und Verbindungseinrichtung können nun Standard-Leitungen, Litzen, Schläuche und sonstige Anschluss- und Antriebsleitungen durch die hoch flexible Verbindung zwischen Schwingelement und Verbindungseinrichtung hindurchgeführt werden.

Ein Edelstahldrahtgeflecht als zentralem Material des Verbindungsstücks bietet mehrere Vorteile. Zum bildet es eine Zugentlastung insbesondere dann, wenn es formschlüssig in den Verschraubungen verpresst ist. Zum anderen wird es als 100%ige leitfähige Verbindung zwischen dem Schwingelement und der Verbindungseinrichtung verwendet. Außerdem dient es indirekt auch als Schirm. Als weiteres verhindert es das Abknicken des Rohres bzw. Schlauches des Verbindungsstücks bzw. der im Rohr bzw. Schlauch verlegten Leitungen. Es verhindert die Abnutzung oder den Abrieb am Kunststoffkabel durch das Schüttgut. Durch das feine und insbesondere außen liegende Drahtgeflecht sind derart ausgebildete Verbindungsstücke auch flexibler als viele Kabel mit innen liegendem Drahtseil. Als Alternative kann das Drahtgeflecht auch durch einen außerhalb verlaufenden Hochtemperatur-Kunststoffschlauch abgedeckt werden, um Produktablagerungen zu vermeiden. Vorteilhaft sind Kombination mit einer Rohrverlängerung und einem anschließenden derartigen flexiblen Verbindungsstück umsetzbar.

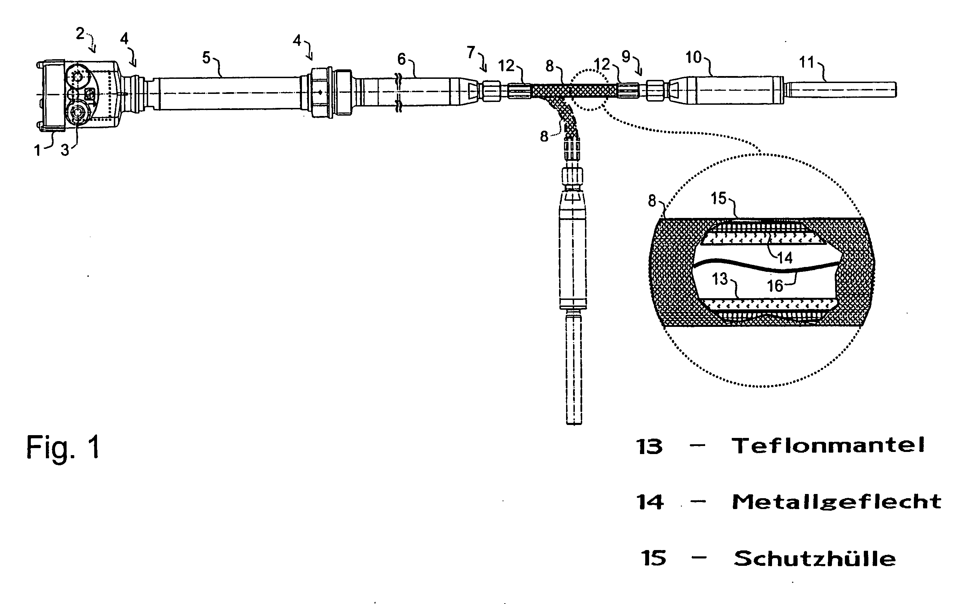

Ein Ausführungsbeispiel wird nachfolgend anhand der Zeichnung näher erläutert. Es zeigt
- Fig. 1: einen Füll- und/oder Grenzstandschalter mit flexiblem Verbindungsstück in zwei beispielhaften Betriebsstellungen des flexiblen Verbindungsstücks.

Wie dies aus Fig.1 ersichtlich ist, besteht eine bevorzugte Füllstand- und/oder Grenzstand-Messvorrichtung aus einer Vielzahl von miteinander kombinierbaren Komponenten. Die Komponenten sind je nach Anwendungszweck geeignet kombinierbar und gegebenenfalls austauschbar gegen gleichartige andere Komponenten. Gleichartige andere Komponenten können z.B. für spezielle Behältnistypen, Schüttgüter oder Füllmedien in den Behältnissen erforderlich sein. Auch gleichartige Komponenten mit anderen physikalischen Parametern oder für elektronische Sonderanwendungen sind einsetzbar.

Bei der dargestellten Ausführungsform ist in einem Gehäuse 1 eine Sende- und Empfangseinrichtung 2 aufgenommen, welche über Anschlüsse 3 mittels einer externen Steuervorrichtung zugreifbar ist. Die Sende- und Empfangseinrichtung 2 umfasst elektronische und/oder elektro-mechanische Komponenten zum Erzeugen einer Schwingung bzw, Vibration, welche als Sendesignal in ein Behältnis abzustrahlen ist. Außerdem umfasst die Sende- und Empfangseinrichtung 2 Komponenten zum Empfangen und Erfassen einer aus dem Behältnis übertragenen Schwingung bzw. Vibration, um ein entsprechendes Empfangssignal oder ein verarbeitetes und ausgewertetes Füllstandsignal über die Anschlüsse 3 an die externe Vorrichtung auszugeben. Optional kann das Gehäuse 1 auch nur eine reine Sendeeinrichtung oder nur eine reine Empfangseinrichtung aufnehmen, wenn beispielsweise in dem Behältnis Sender und Empfänger von Schwingungen getrennt voneinander angeordnet sind.

An dem Gehäuse 1 ist zum Ankoppeln an der Sende- und Empfangseinrichtung 2 eine Verbindungseinrichtung 4 angeordnet, beispielsweise ein Flansch, ein Einschraubstutzen oder ein sonstiger Stutzen. An der Verbindungseinrichtung 4 ist ein Verlängerungsrohr 5 angeschlossen, an welchem über eine weitere Verbindungseinrichtung 4 ein weiteres Verlängerungsrohr 6 angesetzt ist. An dem weiteren Verlängerungsrohr 6 ist stirnseitig eine Befestigungseinrichtung 7 angeordnet, welche wiederum vorzugsweise in Form eines Flansches oder eines Einschraubstutzens ausgebildet ist. An der Befestigungseinrichtung 7 ist ein flexibles Verbindungsstück 8 angesetzt. Am anderen Ende des flexiblen Verbindungsstücks 8 ist über eine weitere Befestigungseinrichtung 9 ein Schwingelement-Anschlusskörper 10 befestigt, welcher ein Schwingelement 11 umfasst.

Die weitere Befestigungseinrichtung 9 ist wie die Befestigungseinrichtung 7 und die Verbindungseinrichtungen 4 vorzugsweise durch einen Flansch oder Einschraubstutzen in Art einer wieder lösbaren Befestigung ausgebildet, so dass die einzelnen Komponenten je nach Bedarf ausgetauscht oder mit anderen erforderlichen entsprechenden Komponenten zusammensetzbar sind.

Die einzelnen Verlängerungsrohre 5, 6, die Verbindungseinrichtungen 4, die Befestigungseinrichtungen 7, 9, das flexible Verbindungsstück 8 und der Schwingelement-Anschlusskörper 10 sind derart ausgebildet, dass eine Schwingung der Sende- und Empfangseinrichtung 2 zu dem Schwingelement 11 übertragen werden kann und vom Schwingelement 11 in den Raum des Behältnisses gestrahlt werden kann. Außerdem können über das Schwingelement 11 aus seinem Umfeld bzw. dem Behältnis aufgenommene Schwingungen in umgekehrter Richtung zu der Sende- und Empfangseinrichtung 2 übertragen werden.

Vorteilhaft wird eine solche Füllstand- und/oder Grenzstand-Messvorrichtung durch die spezielle Ausgestaltung des flexiblen Verbindungsstücks, wie dies aus der Ausschnittsvergrößerung in Fig.1 erkennbar ist. Das beispielhafte flexible Verbindungsstück 8 besteht aus einem zentralen schlauchförmigen Element 13 aus einem vorzugsweise elektrisch isolierenden Kunststoffmaterial. Das Element 13 kann z. B. aus PTFE (Polytetrafluorethylen) bestehen. Innenseitig des zentralen schlauchförmigen Elements 13 können im Bedarfsfall Drahtseile, Kabel und dergleichen als innen liegende Elemente 16 geführt sein.

Umgeben ist das zentrale schlauchförmige Element 13 von einem flexiblen schlauchförmigen und metallischen Geflecht 14. Als Material wird besonders bevorzugt Edelstahl verwendet, um einerseits eine hohe Robustheit gegenüber mechanischen Einflüssen und andererseits eine sehr gute elektrische Leitfähigkeit zur Übertragung der elektromagnetischen Schwingungen zu bieten.

Vorzugsweise ist das schlauchförmige und metallische Geflecht 14 von einem geschlossenen oder segmentierten Kunststoffmantel 15 als einem weiteren schlauchförmigen Element und als Schutzhülle wirkend umgeben.

Wesentliches Element des flexiblen Verbindungsstücks 8 ist dabei das schlauchförmige und metallische Element 14. Die übrigen Elemente bieten je nach denkbarem Anwendungsfall zusätzliche Vorteile, können aber gegebenenfalls auch entfallen. Das schlauchförmige und metallische Geflecht 14 erstreckt sich, wie auch die meisten weiteren Komponenten des flexiblen Verbindungsstücks 8, in Längs- bzw. Schwingungs-Durchleitrichtung des flexiblen Verbindungsstücks 8 durch dieses hindurch.

Außenseitig weist das flexible Verbindungsstück 8 an seinen beiden Endabschnitten Befestigungsmittel 12 auf, welche dazu dienen, mittels insbesondere Verschraubung oder Verschweißung eine für die Schwingungen gut leitfähige und zugleich mechanisch feste Verbindung zu den Befestigungseinrichtungen 7, 9 auszubilden.

Durch das Edelstahldrahtgeflecht mit innen liegendem Hohlschlauch aus Hochtemperaturkunststoff, wie z.B. PTFE, PFA, können problemlos erforderliche Antriebsleitungen als die innen liegenden Elemente 16 zum Schwingelement 11 geführt werden. Je nach Bedarf können hier auch andere Zuleitungen von der Verbindungseinrichtung 4 zum Schwingelement 11 und umgekehrt geführt werden, da es sich vorzugsweise um eine Druckdichte Schlauchverbindung zwischen der Verbindungseinrichtung 4 und dem Schwingelement 11 handelt. Das flexible Verbindungsstück 8 kann auch in anderen Werkstoffkombinationen als Edelstahl-Kunststoff ausgeführt werden.

Dargestellt ist ein lediglich beispielhaftes Füllstands-Grenzstand-Messgerät, das zusätzlich zur flexiblen Zuleitung in Form des Verbindungsstücks 8 zum Schwingelement 11 noch einen optionalen festen Rohrbereich aufweist, welcher durch mehrere Verbindungsrohre 5, 6 ausgebildet wird. Dadurch kann das Messgerät über eine feste Rohrleitung bis zu einem bestimmten Punkt geführt werden und erst dann flexibel bis zu dem Schwingelement 11 weitergeführt werden.

## Patentansprüche

1. Füllstands und/oder Grenzstand-Messvorrichtung mit
- einer Sende- und/oder Empfangseinrichtung (2) zum Erzeugen einer Schwingung bzw. zum Empfangen einer Schwingung und Bereitstellen eines entsprechenden Empfangssignals,
- einem Schwingelement (11), das mit der Sende- und/oder Empfangseinrichtung gekoppelt ist, und
- einem flexiblen Verbindungsstück (8), das in einem Bereich zwischen der Sende und/oder Empfangseinrichtung (2) und dem Schwingelement (11) angeordnet ist,
**dadurch gekennzeichnet, dass**
- das flexible Verbindungsstück (8) als Hochtemperatur-Kunststoffschlauch (13), der unmittelbar von einem metallischen Geflecht (14) umsponnen ist, ausgebildet ist.

2. Füllstand- und/oder Grenzstand-Messvorrichtung nach Anspruch 1, bei der das flexible Verbindungsstück (8) einen nicht kreisrunden Querschnitt aufweist.

3. Füllstand- und/oder Grenzstand-Messvorrichtung nach Anspruch 1 oder 2, bei der das flexible Verbindungselement (8) in Längserstreckung an seinen Enden Befestigungsmittel (12) zum wieder lösbaren Befestigen an der Sende- und/oder Empfangseinrichtung (2) an dem Schwingelement (11) und/oder an Verlängerungsrohren (5, 6) aufweist.

4. Füllstand- und/oder Grenzstand-Messvorrichtung nach einem vorstehenden Anspruch, bei der die Befestigungsmittel (12) in Verbindung mit entsprechenden anzukoppelnden Befestigungseinrichtungen (7, 9) eine metallische Abdichtung ausbilden.

5. Füllstand- und/oder Grenastand-Messvoxrichtung nach Anspruch 4, bei der das metallische Geflecht (14) mit den Befestigungsmitteln verpresst ist.

6. Füllstand- und/oder Grenzstand-Messvorrichtung nach einem vorstehenden Anspruch, bei der das metallische Geflecht (14) ein Metallschutzschlauch ist.

7. Füllstand- und/oder Grenzstand-Messvorrichtung nach einem vorstehenden Anspruch, bei,der das metallische Geflecht (14) aus Edelstahl ausgebildet ist.

8. Füllstand- und/oder Grenzstand-Messvorrichtung nach einem vorstehenden Anspruch, bei der das metallische Geflecht (14) von einem Kunststoffmantel (15) oder einem Kunststoffgewebe umgeben ist.

## Claims

1. Level and/or limit measuring device comprising:
- a transmitting and/or receiving means (2) to generate a vibration or to receive a vibration and to provide a corresponding received signal,
- a vibration element (11) which is coupled with the transmitting and/or receiving means, and
- a flexible connection piece (8) which is arranged in a region between the transmitting and/or receiving means (2) and the vibration element (11),
**characterised in that**
- the flexible connection piece (8) is configured as a high-temperature plastics material tube (13) which is directly braided with a metallic braid (14).

2. Level and/or limit measuring device according to claim 1, wherein the flexible connection piece (8) has a non-circular cross section.

3. Level and/or limit measuring device according to either claim 1 or claim 2, wherein the flexible connection element (8) has in the longitudinal extent, at its ends, attachment means (12) for attachment in a re-releasable manner to the transmitting and/or receiving means (2), to the vibration element (11) and/or to extension pipes (5, 6).

4. Level and/or limit measuring device according to any one of the preceding claims, wherein the attachment means (12) form a metallic seal in conjunction with corresponding fastening attachments (7, 9) which are to be coupled.

5. Level and/or limit measuring device according to claim 4, wherein the metallic braid (14) is pressed together with the attachment means.

6. Level and/or limit measuring device according to any one of the preceding claims, wherein the metallic braid (14) is a protective metal tube.

7. Level and/or limit measuring device according to any one of the preceding claims, wherein the metallic braid (14) is formed from stainless steel.

8. Level and/or limit measuring device according to any one of the preceding claims, wherein the metallic braid (14) is surrounded by a plastics material sheath (15) or by a woven plastics material.

## Revendications

1. Dispositif de mesure d'un état de remplissage et/ou d'un état limite comportant :
- un dispositif d'émission et/ ou de réception (2) pour produire une oscillation ou pour recevoir une oscillation et préparer un signal de réception correspondant,
- un élément oscillant (11) qui est couplé au dispositif d'émission et/ou de réception, et
une pièce de liaison flexible (8) qui est montée dans une zone comprise entre le dispositif d'émission et/ou de réception (2) et l'élément oscillant (11),
caractérisé en que
la pièce de liaison flexible (8) est réalisée sous la forme d'un tuyau en matériau synthétique à haute température (13) qui est directement guipé par un tissu métallique (14).

2. Dispositif de mesure d'un état de remplissage et/ou d'un état limite conforme à la revendication 1, dans lequel la pièce de liaison flexible (8) a une section non circulaire.

3. Dispositif de mesure d'un état de remplissage et/ou d'un état limite conforme à la revendication 1 ou 2, dans lequel l'élément de liaison flexible (8) comporte, dans son étendue longitudinale, à ses extrémités, des moyens de fixation (12) pour permettre sa refixation amovible au dispositif d'émission et/ou de réception (2), à l'élément oscillant (11) et/ou à des tubes de prolongement (5, 6).

4. Dispositif de mesure d'un état de remplissage et/ou d'un état limite conforme à l'une des revendications précédentes, dans lequel les moyens de fixation (12) forment une garniture d'étanchéité métallique, en liaison avec des dispositifs de fixation (7, 9) devant être couplés correspondants.

5. Dispositif de mesure d'un état de remplissage et/ou d'un état limite conforme à la revendication 4, dans lequel le tissu métallique (14) est compacté avec les moyens de fixation.

6. Dispositif de mesure d'un état de remplissage et/ou d'un état limite conforme à l'une des revendications précédentes, dans lequel le tissu métallique (14) est un tuyau de protection métallique.

7. Dispositif de mesure d'un état de remplissage et/ou d'un état limite conforme à l'une des revendications précédentes, selon lequel le tissu métallique (14) est réalisé en acier spécial.

8. Dispositif de mesure d'un état de remplissage et/ou d'un état limite conforme à l'une des revendications précédentes, dans lequel le tissu métallique (14) est entouré par une enveloppe en matériau synthétique (15) ou par un tissu en un matériau synthétique.
